# EUROPÄISCHE PATENTSCHRIFT

(11) **EP 0 560 106 B1**
(45) Veröffentlichungstag und Bekanntmachung des Hinweises auf die Patenterteilung: **24.04.1996**
(21) Anmeldenummer: 93102748.6
(22) Anmeldetag: 22.02.1993
(51) Int. Cl.: B65G 19/02, B65G 17/20

(54) **Förderer zum Transport von auf Bügel hängendem Transportgut**
Conveyor for conveying goods on hangers
Convoyeur pour le transport de marchandises sur cintres

(30) Priorität: 07.03.1992 DE 4207238
(43) Veröffentlichungstag der Anmeldung: 15.09.1993
(73) Patentinhaber: DÜRKOPP ADLER AKTIENGESELLSCHAFT, D-33719 Bielefeld (DE)
(72) Erfinder: Kuhlmann, Walter, W-4937 Lage (DE)
(74) Vertreter: Rehmann, Klaus-Thorsten, Dipl.-Ing.

(56) Entgegenhaltungen:
- DE-A- 3 929 156
- DE-C- 3 929 158

## Beschreibung

Die Erfindung betrifft einen Förderer zum Transport von auf Bügel hängendem Transportgut nach dem Oberbegriff des Anspruchs 1 und eine Schiene für diesen Förderer.

Insbesondere in der Bekleidungsindustrie werden Hängeförderanlagen eingesetzt, bei denen das Fördergut auf Bügeln hängt und diese Bügel, beispielsweise handelsübliche Kleiderbügel, in die Förderanlage eingegeben werden.

Die zur Gattungsbildung herangezogene DE 39 29 158 C2 (US Ser. No. 575,384/1990) offenbart eine Förderanlage zum Transportieren von auf Bügeln hängenden Gütern. Bei dieser Förderanlage, die sowohl als Speicher- als auch als Schrägförderer Verwendung finden kann, erfaßt das in Transportrichtung umlaufende Zugmittel die Bügelhaken an ihrer Spitze und transportiert sie außerhalb ihres Schwerpunktbereichs. Der Bügelhaken liegt also mit seiner Spitze auf dem Zugmittel auf. Der Transport des Bügelhakens auf seiner Spitze bietet den Vorteil, daß die Auf- und Abgabebereiche zu der Transporteinheit parallel angeordnet werden können. Dadurch entstehen keine ansonsten durch den Wechsel der Transportrichtung hervorgerufene Einflußfaktoren auf den Bügel.

Das als Transportband ausgebildete Zugmittel benötigt in vertikaler Richtung bedingt durch die Umlenkung des Zahnriemens einen entsprechenden Platzbedarf. Außerdem kann eine derart gebildete Förderstrecke nur geradeaus geführt werden, weil ein kurvenförmiger Verlauf des Zahnriemens nicht oder nur schwer zu verwirklichen ist. Da der als Schiene dienende Grundkörper gegenüber dem Transportband nur eine Abstützfunktion ausübt, kann es insbesondere bei längerer Ausbildung des Förderstranges zum Flattern und damit zu unerwünschter Geräuschemmission kommen.

Die DE 39 29 156 A1 (US Ser. No. 575,408/1990) offenbart einen Hängeförderer, bei dem das Zugmittel eine horizontal umlaufende Rollenkette ist. Diese Rollenkette ist in einem in einer Schiene angeordneten Kettenkanal geführt.

Hierbei kann der Bügelhaken jedoch nicht auf seiner Spitze transportiert werden, sondern der Bügel muß in herkömmlicher Weise auf die Kette eingehängt werden. Dadurch ist eine geradlinige Auf- und Abgabe in den Förderer nicht möglich.

Der Erfindung liegt daher die Aufgabe zugrunde, die Schiene für die eingangs genannte Förderanlage so fortzubilden, daß auch enge Radien in horizontaler Ebene durchfahrbar und ein geräuscharmer und sicherer Transport des Bügelhakens auf seiner Spitze möglich ist.

Die Lösung der Aufgabe erfolgt durch die kennzeichnenden Merkmale des Anspruchs 1.

Eine vorteilhafte Ausgestaltung der Erfindung gibt Anspruch 2 wieder.

Durch den schrägen Verlauf des Kettenkanals gleitet der Kleiderbügelhaken unabhängig davon wie er in den Förderer eingegeben wird immer in eine definierte Position auf die Rollenkette. Durch die Führung der Rollenkette in der und durch die Schiene werden Schwingungen des Zugmittels wirksam verhindert, so daß ein geräuscharmer Lauf möglich ist.

Anhand einer Zeichnung soll die Erfindung nachfolgend näher erläutert werden.
Es zeigt:
- Fig. 1: das Profil der Schiene im Querschnitt,
- Fig. 2: die schematische Darstellung eines Übergabeförderers, der die erfindungsgemäße Schiene aufweist.

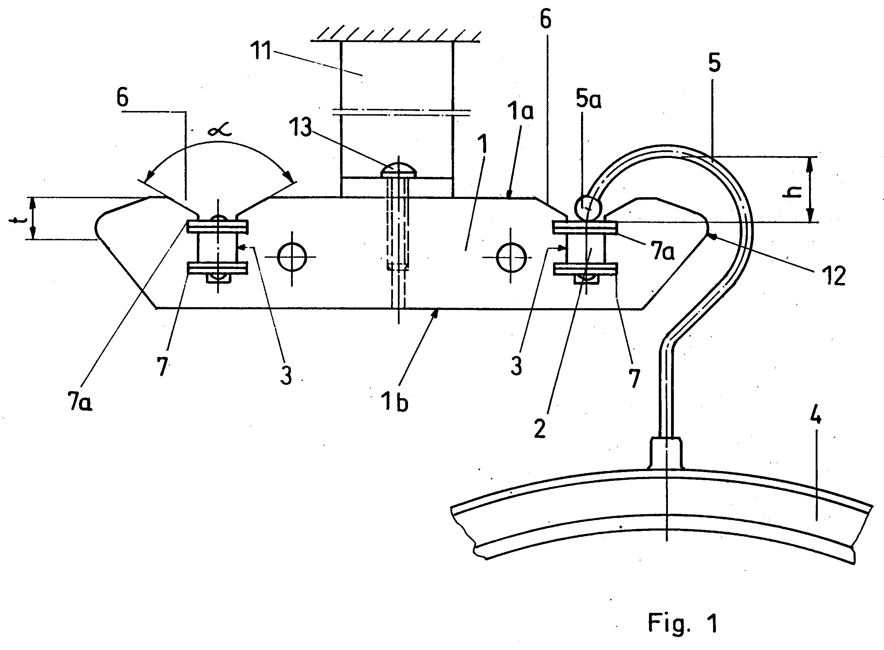

Figur 1 zeigt das Profil der Schiene 1 im Querschnitt. In Längsrichtung parallel zueinander sind zwei Kettenkanäle 3 in das Profil eingebracht, die jeweils zwei waagerecht verlaufende Nuten 7, 7a aufweisen. Die Abmessungen der Kettenkanäle 3 und der Nuten 7, 7a sind so gewählt, daß eine handelsübliche Rollenkette 2 direkt hierin geführt werden kann. Die Schiene 1 ist dazu vorzugsweise aus Kunststoff ausgebildet, um einen geräuscharmen Umlauf der endlosen Rollenkette 2 zu gewährleisten. Nach oben hin sind die Kettenkanäle 3 kegelförmig nach außen erweitert, so daß sich eine V-förmige Schräge in Richtung der in den Kettenkanal 3 eingelegten Rollenkette 2 ergibt. Der Öffnungswinkel α der kegelförmigen Nut 6 beträgt vorzugsweise 120° und besitzt eine Tiefe t die davon abhängt, welche Art von Bügelhaken 5 transportiert werden sollen. Sie ist aber in jedem Fall geringer als die Höhe h, die sich ergibt von der Bügelhakenspitze 5a zur Innenseite des Bügelhakens 5 des Bügels 4, damit der mit seiner Spitze 5a auf der Rollenkette 2 aufliegende Bügelhaken 5 nicht direkt an der Schiene 1 anstößt. Die kegelförmige Nut 6 gewährleistet zum einen, daß der Bügelhaken 5 definiert auf die Rollenkette 2 gleiten oder rutschen kann, unabhängig davon, wie er eingegeben wurden. Andererseits verhindert sie an der Stelle des Übergangs in die Rechtwinkeligkeit der Kettenkanäle 3, daß die Bügelhaken 5 aus der Förderstrecke herausrutschen können.
Um einen möglichst freien Durchgang des Bügelhakens 5 zu gewährleisten, ist die Schiene 1 im Profil annähernd trapezförmig ausgebildet, wobei die Unterseite 1b schmaler ist als die dem Bügelhaken 5 zugeordnete Seite 1a. Die Kettenkanäle 3 liegen soweit zu Mitte der Schiene 1, daß die Seitenkante 12 sowohl Führungs- als auch Stützfunktion für nicht exakt senkrecht zur Transportrichtung stehende Bügel 4, bzw. deren Bügelhaken 5 übernehmen kann, um ein Verklemmen einzelner Bügel 4 während des Transports zu verhindern. Mit anderen Worten: durch diese Maßnahme wird nur eine begrenzte Verdrehung des Bügelhakens 5 zugelassen.

Der mit dieser Schiene 1 ausgestattete Förderer kann sowohl geradeaus aus auch kurvenförmig geführt werden.
Insbesondere sind durch seine kompakten Abmaße auch enge Kurvenradien realisierbar, so daß er als Übergabeförderer zwischen zwei winkelförmig zueinander angeordneten Seilförderern SF1, SF2 dienen kann.

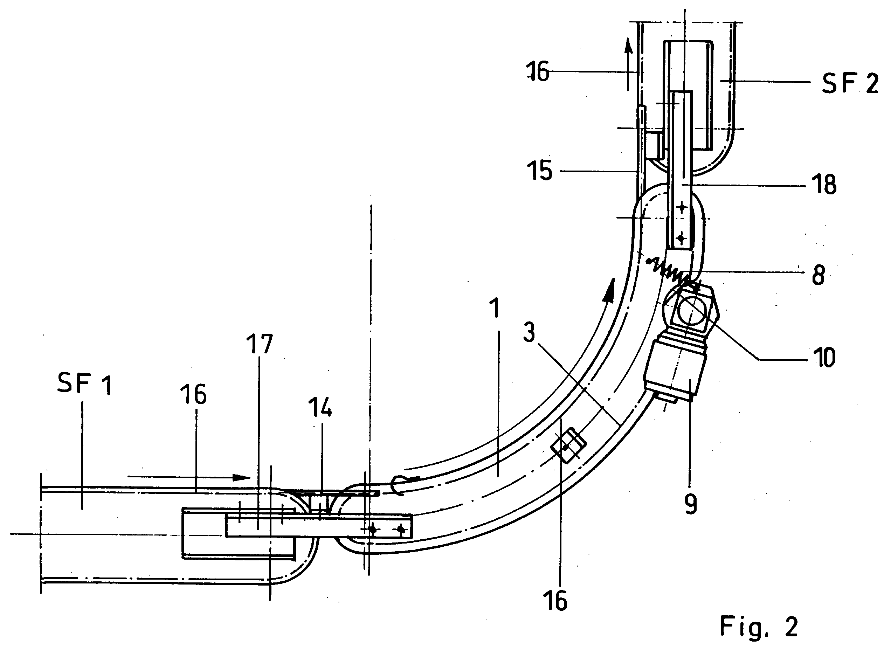

Fig. 2 zeigt die schematische Draufsicht auf einen mit der Schiene 1 ausgestatteten Übergabeförderer von einem Seilförderer SF1 zu einem Seilförderer SF2. Der oberhalb der Schiene 1 angeordnete Antriebsmotor 9 greift über ein nicht näher dargestelltes Zahnrad in eine Ausnehmung 10 der Schiene 1 ein und treibt dadurch die Rollenkette 2 an. Über eine mit ihrem einen Ende an der Oberseite 1a der Schiene 1 befestigte Zugfeder 8, die mit ihrem anderen Ende an das Antriebszahnrad des Antriebsmotors 9 angreift, wird die Rollenkette 2 auf einfache Art und Weise gespannt. Die Schiene 1 ist vorzugsweise über mehrere an ihr ausgebildete oder an ihr mittels Schrauben 13 befestigten Aufhängevorrichtungen 11 an der Hallendecke aufgehängt.

Die Seilförderer SF1 und SF2 sind winkelig zueinander angeordnet. Die Schiene 1 ist entweder einteilig ausgebildet oder aber aus hier nicht näher dargestellten einzelnen Segmenten zusammengesetzt. Es braucht nicht eingehend erläutert zu werden, daß einzelne Segmente den Vorteil bieten, bei entsprechender Bevorratung, jeden winkeligen Versatz der Seilförderer SF1, SF2 zu überbrücken. Über Verbindungsstücke 17, 18 ist die Schiene 1 beidseitig mit den Seilförderern SF1, SF2 verbunden. In der Figur ist die Rollenkette 2 strichpunktiert dargestellt. Es ist erkennbar, daß durch den seitlichen Versatz der Übergabestücke 14, 15 zum Förderstrang 16 eine geradlinige Übergabe vom Seilförderer SF1 auf die Schiene 1 und von hier an den Seilförderer SF2 möglich ist.
Die Schiene 1 kann relativ schmal ausgebildet sein, um einen möglichst geringen Platzbedarf zu realisieren. Die Breite bestimmt sich letztlich nur durch den von der Rollenkette 2 einnehmbaren Radius.

## Patentansprüche

1. Förderer zum Transport von auf Bügeln (4) hängendem Transportgut, dessen Förderstrang in einer Schiene (1) ausgebildet ist, wobei der Förderstrang gebildet wird durch ein in einem Kanal (3) der Schiene geführt laufendes Zugmittel dessen Führung direkt in der und durch die Schiene (1) erfolgt, und die Bügel (4) mit der Spitze (5a) ihres Bügelhakens (5) auf dem Zugmittel aufliegen können, und der Kanal (3) gegenüber der dem Bügelhaken (5) zugewandten Oberfläche (1a) der Schiene (1) zurücksteht und sich nach außen hin öffnet,
dadurch gekennzeichnet, daß
das Zugmittel eine Rollenkette (2) ist, die Schiene (1) in Höhe des Kanals (3) einen zumindest annähernd trapezförmigen Querschnitt aufweist, der Kanal (3) in eine sich kegelförmig öffnende Nut (6) mündet.

2. Förderer nach Anspruch 1,
dadurch gekennzeichnet, daß
der Öffnungswinkel (α) der kegelförmigen Nut (6) etwa 120° beträgt.

3. Schiene für einen Förderer nach Anspruch 1 oder 2, **gekennzeichnet durch**
a) einen zur Führung des Zugmittels dienenden und in seinem Querschnitt der Kontur einer Rollenkette angepaßten Kanal (3), der gegenüber der Oberfläche (1a) zurücksteht und sich nach außen öffnet,
b) einen in Höhe des Kanals (3) zumindest annähernd trapezförmigen Querschnitt,
c) eine sich in Richtung der Oberfläche (1a) kegelförmig öffnende Nut (6), in die der Kanal (3) mündet.

4. Schiene nach Anspruch 3, **dadurch gekennzeichnet, daß** der Öffnungswinkel α der kegelförmigen Nut (6) etwa 120° beträgt.

## Claims

1. A conveyor for conveying goods hanging on hangers (4), with a conveyor section formed in a rail (1), wherein the conveyor section is formed through traction means, which is guided in a channel (3) of the rail and which is guided directly in and by the rail (1), and the tips (5a) of the hanger hooks (5) of the hangers (4) can lie on the traction means, and the channel (3) in the surface (1a) of the rail facing the hanger hook (5) is set back and opens outwardly,
**characterised in that**
the traction means is a roller chain (2),
the rail has an at least almost trapezoidal cross-section at the height of the channel (3), and
the channel (3) opens into a conical opening groove (6).

2. A conveyor according to claim 1, **characterised in that** the angle of opening (α) of the conical groove (6) has a value of approximately 120°.

3. A rail for a conveyor according to claim 1 or 2,
**characterised by**:
(a) a channel (3) which serves to guide the traction means and which is matched in its cross-section to the contours of a roller chain, the said channel (3) being set back from the surface (1a) and opening outwardly,
(b) a cross-section which is at least trapezoidal at the height of the channel (3), and
(c) a groove (6) opening conically in the direction of the surface (1a) into which the channel (3) opens.

4. A rail according to claim 3, **characterised in that** the angle of opening (α) of the conical groove (6) has a value of approximately 120°.

## Revendications

1. Convoyeur pour le transport de marchandises suspendues à des cintres (4), dont la ligne de convoyeur est constituée d'un rail (1), la ligne de convoyeur étant formée d'un moyen de traînage du rail, circulant guidé dans un canal (3) du rail, étant entendu que son guidage se fait directement dans le rail et par le rail, que les cintres (4) peuvent reposer avec la pointe (5a) de leur crochets de cintre (5) sur le moyen de traînage, et que le canal (3) est en retrait par rapport à la surface externe (1a) du rail (1) qui est tournée vers le crochet de cintre (5) et s'ouvre vers l'extérieur,
caractérisé en ce que
- le moyen de traînage est une chaîne à rouleaux (2),
- le rail (1) présente, à hauteur du canal (3), une section au moins approximativement en forme de trapèze,
- le canal (3) débouche dans une rainure (6) s'ouvrant avec une forme conique.

2. Convoyeur suivant la revendication 1, caractérisé en ce que l'angle d'ouverture (α) de la rainure (6) de forme conique est d'environ 120°.

3. Rail pour un convoyeur suivant la revendication 1 ou la revendication 2, caractérisé par
a) un canal (3), servant au guidage du moyen de traînage et adapté, par sa section, au contour d'une chaîne à rouleaux, ce canal étant en retrait par rapport à la surface externe (1a) et s'ouvrant vers l'extérieur,
b) une section de forme au moins trapézoïdale à hauteur du canal (3),
c) une rainure (6) s'ouvrant avec une forme conique vers la surface externe (1a) et débouchant dans le canal (3).

4. Rail suivant la revendication 3, caractérisé en ce que l'angle d'ouverture (α) de la rainure (6) de forme conique est d'environ 120°.
